# FASCICULE DE BREVET EUROPEEN

(11) **EP 2 118 477 B1**
(45) Date de publication et mention de la délivrance du brevet: **31.08.2016**
(21) Numéro de dépôt: 08708445.5
(22) Date de dépôt: 30.01.2008
(51) Int. Cl.: F02K 1/82, F02K 1/00

(54) **DISPOSITIF DE TRAITEMENT ACOUSTIQUE**
VORRICHTUNG ZUR AKUSTISCHEN BEHANDLUNG
APPARATUS FOR ACOUSTIC TREATMENT

(30) Priorité: 01.02.2007 FR 0753015
(43) Date de publication de la demande: 18.11.2009
(73) Titulaire: AIRBUS OPERATIONS, 31060 Toulouse (FR)
(72) Inventeur: MERCAT, Florent, 31300 Toulouse (FR)
(74) Mandataire: Ilgart, Jean-Christophe
(86) Numéro de dépôt international: PCT/EP2008/051130
(87) Numéro de publication internationale: WO 2008/095846

(56) Documents cités:
- FR-A1- 2 818 421
- US-A- 3 948 346
- US-A- 4 064 961
- US-A- 4 240 519
- US-A- 4 287 962
- US-A1- 2004 076 512
- JIA YU AND EUGENE CHIEN: "Folding Cavity Acoustic Liner for Combustion Noise Reduction" 12TH AIAA/CEAS AEROACUSTICS CONFERENCE, 8 mai 2006 (2006-05-08), - 10 mai 2006 (2006-05-10) XP002450867 Cambridge (USA) cité dans la demande

## Description

### Domaine technique de l'invention et art antérieur

L'invention concerne un dispositif de traitement acoustique des bruits de turbine et, plus particulièrement, un dispositif de traitement acoustique de la structure interne du conduit d'éjection primaire des nacelles de turboréacteurs, plus communément appelé « plug » en langue anglaise.

Deux sources de bruit sont prédominantes dans les conduits d'éjection primaire: le bruit de turbine à hautes fréquences (des fréquences de l'ordre de 5000Hz) et le bruit de combustion à basses fréquences (des fréquences situées entre 300Hz et 1000Hz).

Différents types de traitement acoustique sont connus pour l'atténuation des bruits qui se propagent dans les conduits d'éjection primaire. Un premier type consiste à placer des couches alvéolées de faible épaisseur sur la face extérieure du plug qui permettent d'atténuer les bruits de hautes fréquences (bruit de turbine). Des couches d'épaisseurs plus importants (pouvant atteindre, par exemple, une quinzaine de centimètres) ont été aussi envisagées. Ces couches permettent alors d'atténuer des fréquences de l'ordre de 800Hz. Cependant, la place disponible dans le « plug » ne permet pas d'avoir des traitements de plus grande épaisseur, et donc d'atténuer des fréquences plus basses.

Un autre traitement connu de bruit hautes fréquences consiste à juxtaposer des couches alvéolées, par exemple en nid d'abeille, comme cela est divulgué dans la demande de brevet FR 2 818 421. Il est cependant alors difficile d'intégrer sur la surface extérieure du plug plusieurs couches de nid d'abeille du fait de l'encombrement qui découle d'un tel montage. Par ailleurs, il est également difficile d'adapter la forme de la structure en nid d'abeille à la forte courbure de la face extérieure du plug tout en gardant une bonne efficacité acoustique.

En ce qui concerne le traitement des basses fréquences, la réalisation d'un dispositif de type résonateur de Helmholtz est divulguée.dans le document intitulé « Folding Cavity Acoustic Liner for Combustion Noise Reduction » (Jia Yu et Eugène Chien, 12th AIAA/CEAS Aeroacoustics Conference (27th AIAA Aeroacoustics Conference) 8-10 Mai 2006, Cambridge Massachusetts). Ce dispositif qui traite les basses fréquences, par exemple les fréquences de l'ordre de 400Hz, ne traite pas les hautes fréquences.

Le dispositif de l'invention ne présente pas les inconvénients mentionnés ci-dessus. Le dispositif de l'invention permet, de manière particulièrement avantageuse, d'atténuer les bruits sur une large gamme de hautes fréquences. Associé à un dispositif d'atténuation de type résonateur de Helmholtz tel que décrit dans le document de Jia Yu et Eugène Chien mentionné ci-dessus, le dispositif d'atténuation de bruits de l'invention permet avantageusement une atténuation des bruits sur une large gamme de fréquences allant des basses aux hautes fréquences.

### Exposé de l'invention

En effet, l'invention concerne un dispositif de traitement acoustique, selon la revendication 1, de structure interne de conduit d'éjection primaire de nacelle de turboréacteur, la structure comprenant une zone amont et une zone aval par rapport à un sens d'écoulement d'air dans le conduit d'éjection primaire, la zone amont ayant une paroi extérieure perforée pour laisser entrer des ondes acoustiques et la zone aval ayant une paroi extérieure pleine, les zones amont et aval étant positionnées de part et d'autre d'une paroi séparatrice ayant une première face du côté de la zone amont et une deuxième face du côté de la zone aval, caractérisé en ce que le dispositif est constitué par une micro-porosité de la paroi séparatrice et par une structure en nid d'abeille pour l'atténuation des ondes acoustiques hautes fréquences qui recouvre la face de la paroi séparatrice qui est du côté de la zone aval.

Selon une caractéristique supplémentaire de l'invention, la structure en nid d'abeille est constituée d'au moins une couche d'alvéoles et la couche d'alvéoles la plus éloignée de la paroi séparatrice est recouverte d'un réflecteur acoustique.

Selon une autre caractéristique supplémentaire de l'invention, lorsque la structure en nid d'abeille comprend au moins deux couches d'alvéoles empilées, deux couches d'alvéoles empilées voisines sont séparées par un septum.

Selon encore une autre caractéristique supplémentaire de l'invention, les alvéoles des différentes couches d'alvéoles ont des épaisseurs différentes selon les couches afin d'atténuer des ondes acoustiques de bandes de fréquences différentes.

Selon encore une autre caractéristique supplémentaire de l'invention, la structure en nid d'abeille est faite d'un métal apte à résister aux températures d'éjection chaude.

Selon encore une autre caractéristique supplémentaire de l'invention, le dispositif comprend du côté de la zone aval de la structure, un percement de la paroi extérieure de la structure, une structure en nid d'abeille supplémentaire apte à atténuer des ondes acoustiques de hautes fréquences qui recouvre une face interne de la paroi extérieure et un réflecteur acoustique qui recouvre la structure en nid d'abeille supplémentaire.

Selon encore une autre caractéristique supplémentaire de l'invention, la zone amont comprend une pluralité de résonateurs de Helmholtz pour l'atténuation des ondes acoustiques de fréquences basses.

Le dispositif de l'invention se démarque des dispositifs de l'art antérieur, entre autres, par le positionnement d'une structure en nid d'abeille à l'intérieur du plug. La présence de la structure en nid d'abeille à l'intérieur du plug, sur une partie de séparation transversale plate qui sépare deux cavités qui participent au plug, présente plusieurs avantages. Ainsi, outre le fait de pouvoir empiler facilement plusieurs couches de nid d'abeille sans contraintes d'intégration particulières, il est également possible de s'affranchir du problème de la mise en forme de la structure en nid d'abeille puisque, le nid d'abeille étant plat, sa forme s'adapte naturellement à la forme plate de la séparation transversale.

Un tel traitement acoustique peut, par ailleurs, être couplé à un traitement par couche de faible épaisseur (structure en nid d'abeille), tel que mentionné précédemment, accroissant ainsi l'atténuation des bruits hautes fréquences.

### Brève description des figures

D'autres caractéristiques et avantages de l'invention apparaîtront à la lecture de modes de réalisation préférentiels faits en référence aux figures jointes, parmi lesquelles :
- les figures 1A et 1B représentent, respectivement, une vue en perspective et une vue en coupe d'une structure interne de conduit d'éjection primaire munie d'un dispositif de traitement de bruit selon l'invention ;
- les figures 2A et 2B représentent des vues en coupe de deux variantes d'une structure interne de conduit d'éjection primaire munie d'un dispositif de traitement de bruit selon un premier mode de réalisation de l'invention ;
- la figure 3 représente une vue en coupe d'une structure interne de conduit d'éjection primaire munie d'un dispositif de traitement de bruit selon un deuxième mode de réalisation de l'invention.

Sur toutes les figures, les mêmes références désignent les mêmes éléments.

### Description détaillée des modes de réalisation de l'invention

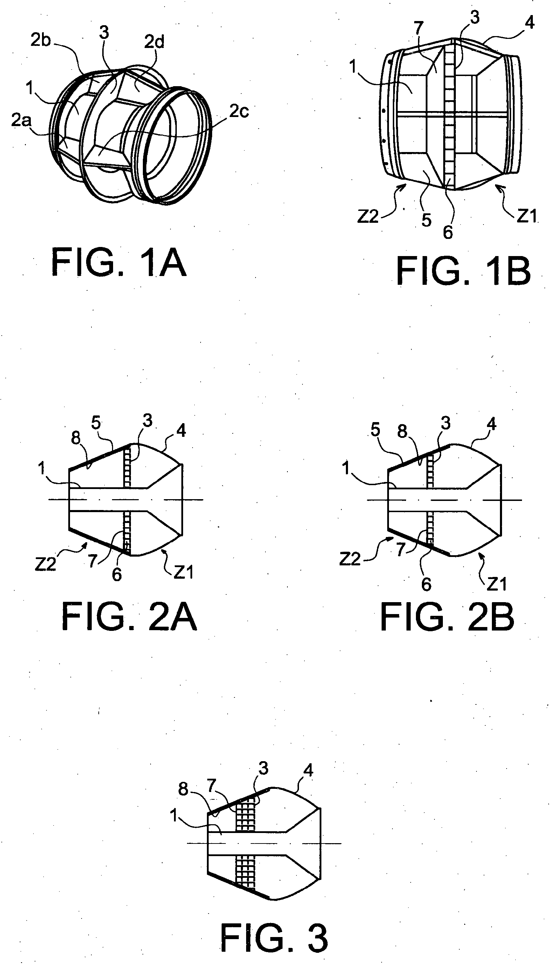

Les figures 1A et 1B représentent, respectivement, une vue en perspective et une vue en coupe d'une structure interne de conduit d'éjection primaire munie d'un dispositif de traitement de bruit selon l'invention.

La structure interne de conduit d'éjection primaire (plug) est une structure connue en soi qui sera rappelée succinctement ci-après. La figure 1A représente une vue en perspective de la structure dépourvue de ses parois externes et la figure 1B représente une vue en coupe longitudinale de la structure munie de ses parois externes.

La structure comprend un corps central 1 qui s'ouvre en forme d'entonnoir à une de ses extrémités, une paroi séparatrice transversale 3 et des parois séparatrices longitudinales 2a, 2b, 2c, 2d, etc., de part et d'autre de la paroi séparatrice transversale 3. La paroi séparatrice transversale 3 sépare le plug en une zone amont Z1 et une zone aval Z2, définies par rapport au sens d'écoulement de l'air qui circule dans le circuit d'éjection. Par rapport au corps central 1, la zone amont est située du côté de l'entonnoir et la zone aval de l'autre côté. Les parois séparatrices longitudinales sont au nombre de quatre dans la zone amont, ainsi que dans la zone aval. Elles sont disposées à 90° les unes des autres autour du corps central 1. Les parois séparatrices longitudinales de la zone amont sont dans le prolongement des parois séparatrices longitudinales de la zone aval.

Du côté de la zone amont Z1, une paroi 4 perforée ferme l'espace situé entre la paroi séparatrice transversale 3 et la partie du corps central 1 qui se termine eh entonnoir. Le taux de perforation de la paroi 4 est, par exemple, égal à 15%. Les quatre parois longitudinales situées entre la paroi transversale 3 et l'entonnoir 1 forment alors, avec la paroi 4, quatre cavités.

De même, du côté de la zone aval Z2, une paroi pleine 5 ferme l'espace situé entre la paroi séparatrice transversale 3 et la partie du corps central 1 dont l'extrémité est située à l'opposé de l'entonnoir, les quatre parois longitudinales situées entre la paroi transversale 3 et la partie du corps central située à l'opposé de l'entonnoir définissant, avec la paroi 5, quatre cavités.

Dans le cadre de l'invention, la paroi transversale 3, plus communément appelée septum, est une paroi micro-poreuse percée de trous dont le diamètre est, par exemple, égal à quelques dixièmes de millimètres. Le taux de perforation de la paroi transversale 3 est, par exemple, égal à 5%. L'épaisseur de la paroi transversale est, par exemple, égale à quelques dixièmes de millimètres.

Comme cela a été mentionné précédemment, la paroi 4 du plug est préférentiellement percée. Les ondes acoustiques pénètrent alors dans le plug par la paroi 4. Les séparateurs longitudinaux qui divisent l'intérieur du plug en plusieurs cavités empêchent alors la propagation transversale des ondes acoustiques de fréquences basses. Les cavités dont une paroi est percée de trous constituent ainsi des résonateurs de Helmholtz qui atténuent les bruits basse fréquence. La fréquence des bruits atténués dépend de la taille des cavités (à titre d'exemple non limitatif, une cavité d'environ 20cm de côté atténue les fréquences aux environs de 500Hz).

Du côté aval, la paroi transversale 3 est recouverte d'une structure en nid d'abeille 6. La structure en nid d'abeille 6 est constituée, en fait, de quatre structures en nid d'abeille élémentaires séparées par les parois longitudinales. Pour des raisons de commodité, on parlera par la suite de « la » structure en nid d'abeille 6, sachant que celle-ci est constituée, en fait, de N structures en nid d'abeille élémentaires, N étant le nombre de parois de séparation longitudinales.

La -structure en nid d'abeille 6 a pour fonction d'atténuer les hautes fréquences (gamme de fréquences allant, par exemple, de 4000Hz à 5000Hz). La structure en nid d'abeille 6 est constituée d'une pluralité d'alvéoles de faibles dimensions. Par « faibles dimensions », il faut entendre des alvéoles ayant, par exemple, un côté d'environ 1cm. La structure en nid d'abeille peut être une structure à 1 degré de liberté (structure SDOF, SDOF pour « Simple Degree OF Freedom »), à 2 degrés de liberté (structure DDOF, DDOF pour « Double Degree Of Freedom ») ou, plus généralement, à M degrés de liberté (structure MDOF, MDOF pour « Multiple Degree Of Freedom »), M étant un entier supérieur à 2.

La structure en nid d'abeille permet d'éviter la propagation transversale des ondes acoustiques de hautes fréquences. Une structure en nid d'abeille SDOF comprend une seule couche d'alvéoles alors qu'une structure en nid d'abeille DDOF est constituée d'un empilement de deux couches d'alvéoles et une structure en nid d'abeille MDOF est constituée d'un empilement de M couches d'alvéoles, M étant un nombre entier supérieur à 2. Quand la structure en nid d'abeille est constituée d'au moins deux couches d'alvéoles empilées, deux couches d'alvéoles voisines sont séparées par un septum tel que celui constitué par la paroi transversale 3. Dans tous les cas, la couche ou l'empilement de couches est fermé par une tôle rigide non percée 7 située à l'opposé de la paroi transversale 3 et qui joue un rôle de réflecteur acoustique. A titre d'exemple non limitatif, les figures 1B, 2A et 2B représentent une structure en nid d'abeille à une seule couche et la figure 3 une structure en nid d'abeille à trois couches.

Les structures à plusieurs couches permettent avantageusement d'atténuer plusieurs bandes de fréquences à la fois, chaque couche en nid d'abeille atténuant une bande de fréquences en fonction de son épaisseur.

Les différents septums qui séparent les différentes couches de nid d'abeille, les différentes couches de nid d'abeille et le réflecteur arrière 7 sont assemblés sous la forme d'une pièce unique avant d'être introduits dans le plug. Ils sont fabriqués dans un métal capable de résister aux températures de l'éjection chaude. Ils sont soudés entre eux par brasage afin d'obtenir des plaques de traitement acoustique (SDOF, DDOF ou MDOF). Seul le septum 3 n'est pas assemblé puisqu'il constitue le séparateur transversal du plug. Une fois les pièces qui constituent un nid d'abeille assemblées, le nid d'abeille est monté à l'intérieur du plug : la face opposée au réflecteur 7 est soudée par brasage sur le septum 3 et les extrémités latérales du nid d'abeille sont soudées par brasage aux séparateurs longitudinaux.

La réalisation de la structure en nid d'abeille à l'intérieur du plug, au contact de la paroi transversale 3, permet avantageusement d'obtenir une structure dépourvue de contraintes fortes en ce qui concerne sa hauteur totale. Avantageusement, également, le septum 3 peut être réalisé à différents endroits du plug, permettant ainsi que soient modifiées les dimensions des résonateurs de Helmholtz. La figure 2A correspond à un premier exemple de position du septum 3 et la figure 2B correspond à un deuxième exemple de position pour lequel les résonateurs de Helmholtz ont un volume plus important que dans le premier exemple, permettant ainsi une atténuation de bruits de fréquences plus basses.

Dans tous les modes de réalisation, il est également possible de placer, côté aval, sur la surface intérieure de la paroi extérieure, une couche de traitement en nid d'abeille de faible épaisseur 8, comme cela apparaît, par exemple, sur les figures 2A, 2B et 3. Dans ce cas, la paroi extérieure est percée et un réflecteur acoustique recouvre la structure en nid d'abeille, ce qui ferme la structure entre la paroi transversale 3 et le corps central 1. Cela permet avantageusement d'accroître l'atténuation des bruits de hautes fréquences.

Une structure en nid d'abeille à seule couche constitue un résonateur quart d'onde pour les hautes fréquences sous réserve d'un choix adéquat de sa hauteur (par exemple, une hauteur de l'ordre de 1 à 2cm pour des fréquences allant de 4000 à 5000Hz). Dans les autres modes de réalisation où le nid d'abeille comprend plusieurs couches, le fait d'avoir plusieurs couches de hauteurs différentes permet, par le même phénomène de résonance, d'atténuer le bruit à différentes fréquences.

## Revendications

1. Dispositif de traitement acoustique de structure interne de conduit d'éjection primaire de nacelle de turboréacteur, la structure comprenant une zone amont (Z1) et une zone aval (Z2) par rapport à un sens d'écoulement d'air dans le conduit d'éjection primaire, la zone amont ayant une paroi extérieure (4) perforée pour laisser entrer des ondes acoustiques et la zone aval ayant une paroi extérieure (5) pleine, les zones amont et aval étant positionnées de part et d'autre d'une paroi séparatrice (3) ayant une première face du côté de la zone amont et une deuxième face du côté de la zone aval, **caractérisé en ce que** la paroi séparatrice (3) est une paroi microporeuse pércée de trous et **en ce qu'**une structure en nid d'abeille pour l'atténuation des ondes acoustiques hautes fréquences recouvre la deuxième face de la paroi séparatrice (3).

2. Dispositif selon la revendication 1, dans lequel la structure en nid d'abeille est constituée d'au moins une couche d'alvéoles et en ce que la couche d'alvéoles la plus éloignée de la paroi séparatrice (3) est recouverte d'un réflecteur acoustique (7).

3. Dispositif selon la revendication 2, dans lequel, lorsque la structure en nid d'abeille comprend au moins deux couches d'alvéoles empilées, deux couches d'alvéoles empilées voisines sont séparées par un septum.

4. Dispositif selon la revendication 3, dans lequel les alvéoles des différentes couches d'alvéoles ont des épaisseurs différentes selon les couches afin d'atténuer des ondes acoustiques de bandes de fréquences différentes.

5. Dispositif selon l'une quelconque des revendications précédentes, dans lequel la structure en nid d'abeille est faite d'un métal apte à résister aux températures d'éjection chaude.

6. Dispositif selon l'une quelconque des revendications précédentes et qui comprend, du côté de la zone aval de la structure, un percement de la paroi extérieure (5) de la structure, une structure en nid d'abeille supplémentaire (8) apte à atténuer des ondes acoustiques de hautes fréquences qui recouvre une face interne de la paroi extérieure (5) et un réflecteur acoustique qui recouvre la structure en nid d'abeille supplémentaire (8).

7. Dispositif selon l'une quelconque des revendications précédentes, dans lequel la zone amont (Z1) comprend une pluralité de résonateurs de Helmholtz pour l'atténuation des ondes acoustiques de fréquences basses.

## Patentansprüche

1. Verfahren zur akustischen Behandlung einer inneren Struktur eines primären Abgaskanals einer Triebwerksgondel, wobei die Struktur bezüglich einer Luftströmungsrichtung im primären Abgaskanal eine stromaufwärtige Zone (Z1) und eine stromabwärtige Zone (Z2) enthält, wobei die stromaufwärtige Zone eine gelochte Außenwand (4) hat, um Schallwellen eintreten zu lassen, und die stromabwärtige Zone eine massive Außenwand (5) hat, wobei die stromaufwärtigen und stromabwärtigen Zonen zu beiden Seiten einer Trennwand (3) positioniert sind, die eine erste Seite auf der Seite der stromaufwärtigen Zone und eine zweite Seite auf der Seite der stromabwärtigen Zone hat, **dadurch gekennzeichnet, dass** die Trennwand (3) eine durchlöcherte mikroporöse Wand ist, und dass eine Bienenwabenstruktur zur Dämpfung der hochfrequenten Schallwellen die zweite Seite der Trennwand (3) bedeckt.

2. Vorrichtung nach Anspruch 1, wobei die Bienenwabenstruktur aus mindestens einer Zellenschicht besteht, und dass die am weitesten von der Trennwand (3) entfernte Zellenschicht mit einem akustischen Reflektor (7) bedeckt ist.

3. Vorrichtung nach Anspruch 2, wobei, wenn die Bienenwabenstruktur mindestens zwei gestapelte Zellenschichten enthält, zwei benachbarte gestapelte Zellenschichten durch ein Septum getrennt sind.

4. Vorrichtung nach Anspruch 3, wobei die Zellen der verschiedenen Zellenschichten je nach den Schichten unterschiedliche Dicken haben, um Schallwellen unterschiedlicher Frequenzbänder zu dämpfen.

5. Vorrichtung nach einem der vorhergehenden Ansprüche, wobei die Bienenwabenstruktur aus einem Metall besteht, das den heißen Abgastemperaturen standhalten kann.

6. Vorrichtung nach einem der vorhergehenden Ansprüche, und die auf der Seite der stromabwärtigen Zone der Struktur eine Durchbohrung der Außenwand (5) der Struktur, eine eine Innenseite der Außenwand (5) bedeckende zusätzliche Bienenwabenstruktur (8), die hochfrequente Schallwellen dämpfen kann, und einen akustischen Reflektor enthält, der die zusätzliche Bienenwabenstruktur (8) bedeckt.

7. Vorrichtung nach einem der vorhergehenden Ansprüche, wobei die stromaufwärtige Zone (Z1) eine Vielzahl von Helmholtz-Resonatoren für die Dämpfung der niederfrequenten Schallwellen enthält.

## Claims

1. Acoustic treatment device for the internal structure of a primary ejection duct of a turbojet nacelle, the structure comprising an upstream zone (Z1) and a downstream zone (Z2) relative to an airflow direction in the primary ejection duct, the upstream zone having a perforated outside wall (4) to allow acoustic waves to enter and the downstream zone having a solid outside wall (5), the upstream and downstream zones being located on each side of a separating wall (3) with a first face on the side of the upstream zone and a second face on the side of the downstream zone, **characterised in that** the separating wall (3) is a microporous wall full of holes and **in that** a honeycomb structure to attenuate high frequency acoustic waves covers the second face of the separating wall in the downstream zone.

2. Device according to claim 1, in which the honeycomb structure is formed of at least one cellular layer and in that the cellular layer furthest from the separating wall (3) is covered by an acoustic reflector (7).

3. Device according to claim 2, in which, when the honeycomb structure comprises at least two layers of stacked cells, two adjacent layers of stacked cells are separated from each other by a septum.

4. Device according to claim 3, in which the cells in the different cell layers have different thicknesses in different layers in order to attenuate acoustic waves from different frequency bands.

5. Device according to any one of the previous claims, in which the honeycomb structure is made of a metal capable of resisting hot ejection temperatures.

6. Device according to any one of the previous claims, and comprises in the zone downstream from the structure, a perforation in the outside wall (5) of the structure, an additional honeycomb structure (8) capable of attenuating high frequency acoustic waves that covers an internal face of the outside wall (5) and an acoustic reflector (8) that covers the additional honeycomb structure.

7. Device according to any one of the previous claims, in which the upstream zone (Z1) comprises a plurality of Helmholtz resonators for attenuation of low frequency acoustic waves.
